# EUROPEAN PATENT SPECIFICATION

(11) **EP 0 990 582 B1**
(45) Date of publication and mention of the grant of the patent: **29.08.2012**
(21) Application number: 99119362.4
(22) Date of filing: 29.09.1999
(51) Int. Cl.: B62K 25/24, B62K 21/02, B62K 25/16

(54) **Front wheel suspension assembly for a motorcycle**
Vorderradaufhängung für Motorrad
Suspension de roue avant pour motocyclette

(30) Priority: 02.10.1998 JP 28184198; 15.04.1999 JP 10855799
(43) Date of publication of application: 05.04.2000
(73) Proprietor: HONDA GIKEN KOGYO KABUSHIKI KAISHA, Minato-ku, Tokyo (JP)
(72) Inventor: Takayanagi, Shinji, 4-1, Chuo 1-chome, Wako-shi, Saitama (JP); Nakagawa, Mitsuo, 4-1, Chuo 1-chome, Wako-shi, Saitama (JP); Kobayashi, Hiroyoshi, 4-1, Chuo 1-chome, Wako-shi, Saitama (JP); Miwa, Michiko, 4-1, Chuo 1-chome, Wako-shi, Saitama (JP); Shimozato, Noriya, 4-1, Chuo 1-chome, Wako-shi, Saitama (JP); Furuhashi, Hiromi, 4-1, Chuo 1-chome, Wako-shi, Saitama (JP)
(74) Representative: Liska, Horst

(56) References cited:
- EP-A- 0 621 171
- WO-A-93/03952
- DE-U- 8 911 665
- GB-A- 555 975
- PATENT ABSTRACTS OF JAPAN vol. 015, no. 350 (M-1154), 5 September 1991 (1991-09-05) & JP 03 136995 A (YAMAHA MOTOR CO LTD), 11 June 1991 (1991-06-11)

## Description

### Technical Field of th Invention

The present invention relates to a motorcycle, particularly to an improvement in front suspension and steering.

A motorcycle according to the preamble of claim 1 is known from GB 555 975 A.

As further technologies related to front suspension of a motorcycle, there are, for example, Japanese Examined Patent Publication No. Hei 6-519 "Suspension Apparatus for bicycle" (conventional technology (1)), Japanese Unexamined Patent Publication No. Hei 3-136995 "Swing arm structure of front wheel suspension for motorcycle" (conventional technology (2)) and WO 93/ 03 952 A, which discloses a motorcycle, in which a swing arm and a steering arm are offset to one side of the center of the vehicle and a hub of a front wheel is arranged in the center plane of the wheel.

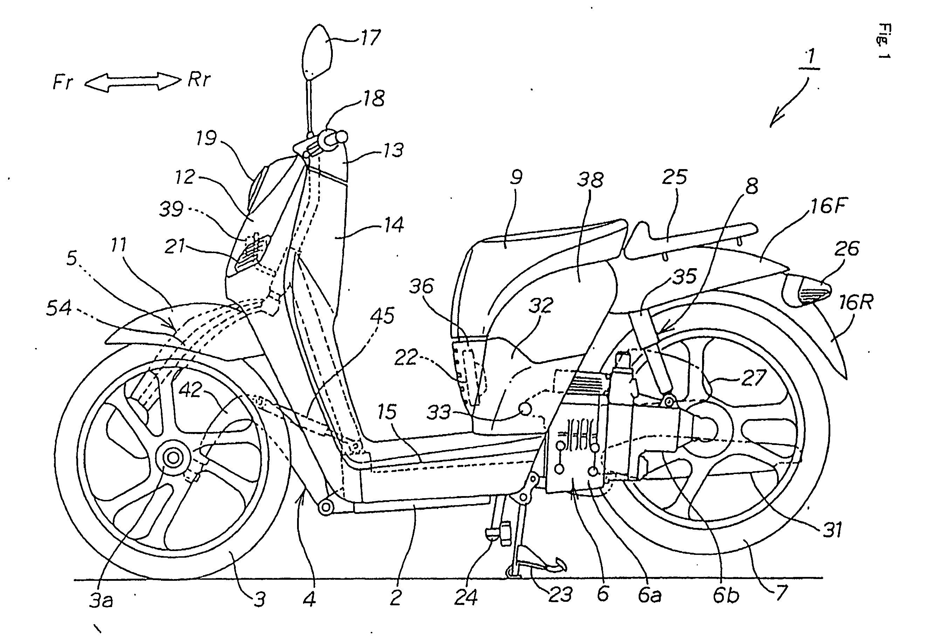

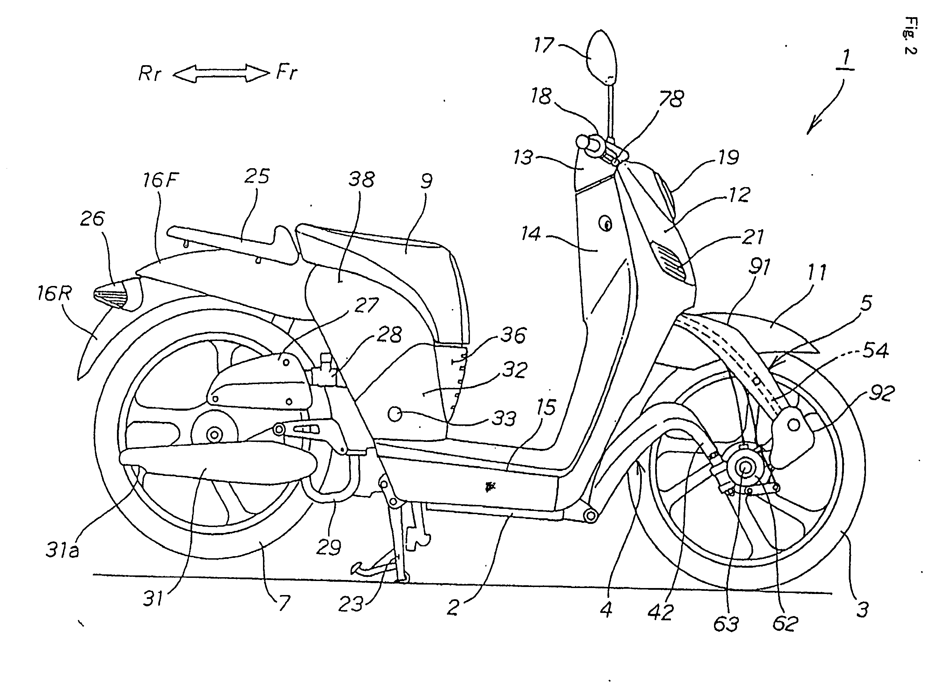

In case of the above-described conventional technology (1), according to Fig. 1 and Fig. 2 of the publication, a front supporter 4 (numerals described in the publication are referred, the same as follows of a chassis is extended in a front upper direction, a front wheel suspension is installed at a front end thereof, a supporter arm 12 of the front wheel suspension is extended to the center of a wheel while detouring the wheel 13, a shaft portion 39 is attached to a front end thereof and the wheel 13 is attached to the shaft portion 39. The conventional technology is provided with a disk brake, according to the disk brake, a cup 35c of a brake disk 35 is attached to a web 37 of the wheel 13, at inside of the cup 35c, a tongue portion 53 directed in an upper direction is extended from the shaft portion 39, a brake disk yoke 54 is attached to the tongue portion 53, an operating portion 35a of the brake disk 35 is surrounded by the brake disk yoke 54 and the brake is operated by hydraulic pressure.

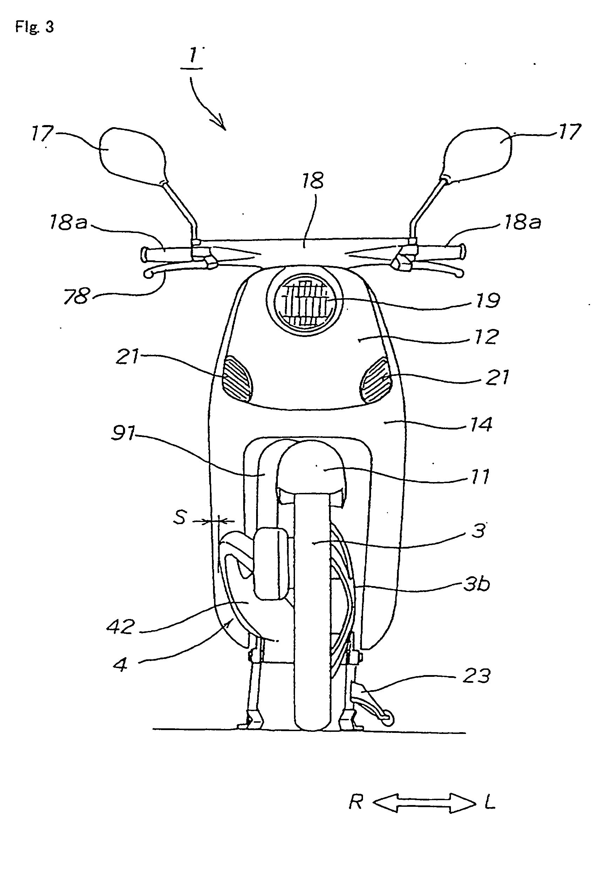

In the case of the above-described conventional technology (2), according to Fig. 3 of the publication, a lower arm 33 is attached to a main frame swingably in an up and down direction, a lower knuckle arm 30 is attached to the lower arm 33 via a lower joint (ball joint) 39 swingably in a left and right direction and a front wheel 5 is rotatably attached to a steering knuckle 25 integral with the lower knuckle arm 30 via an axle 27 to thereby carry out steering of the front wheel 5 via the steering knuckle 25.

### Problems to Be Solved by the Invention

According to the above-described conventional technology (1), the brake disk yoke 54 is attached to the shaft portion 39 attached to the support arm 12 via the tongue portion 53, further, the cup 35c of the brake disk 35 is attached to the web 37 of the wheel 13 and therefore, a number of constituent parts around the shaft portion as well as around the brake is large, which magnifies the constitution.

According to the above-described conventional technology (2), the lower knuckle arm 30 is attached to the lower arm 33 via the ball joint 39 as the lower joint swingably in the left and right direction. However, in the case of the ball joint 39 (which corresponds to a king pin), the fitting accuracy of the joint per se cannot simply be adjusted. Stiffness of a connecting portion of the ball joint 39 is changed in accordance with the fitting accuracy. Therefore, a consideration for further stabilizing a steering characteristic (a characteristic of a steering angle of the front wheel 5 relative to a steering angle of a handle bar) or a steering torque characteristic and there is a room for improvement.

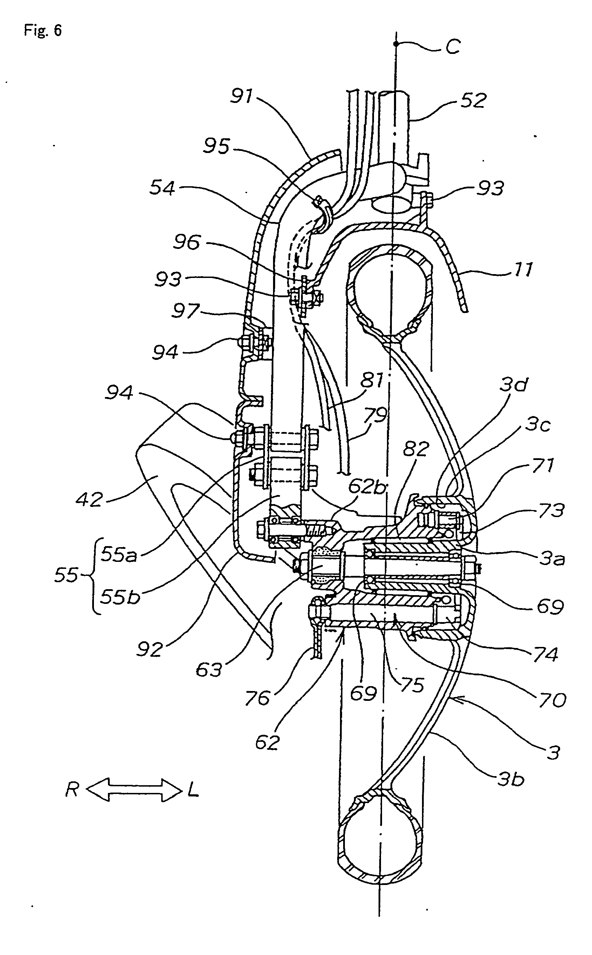

Further, in the case of the above-described conventional technology (2), according to Fig. 6 of the publication, a brake disk 50 is attached to the front wheel 5, a caliper brake 11 is screwed to the steering knuckle 25 via a bracket and therefore, a number of constituent parts around the brake is large and the constitution is magnified.

It is an object of the present invention (1) to achieve a reduction in a number of parts around an axle holder block, small size formation and light weight formation thereof,(2) to make adjustable stiffness of a connecting portion of the axle holder block relative to a swing arm and (3) to promote the maneuverability of the motorcycle.

This object is achieved by a motorcycle according to claim 1.

According to Claim 1, there is provided a motorcycle in which a swing arm is attached to a main frame swingably in an up and down direction, an axle holder block is attached to the swing arm via a king pin pivotably in a left and right direction, a front wheel is rotatably attached to an axle of the axle holder block, a knuckle is integrally extended from the axle holder block and a steering arm is connected to the knuckle to thereby carry out steering of the front wheel, wherein brake shoes are attached to the axle holder block, a brake drum is integrally formed with a hub of the front wheel and the brake shoes are made to face an inner peripheral face of the brake drum.

The axle holder block serves also as an attaching portion of the brake shoes and the hub of the front wheel serves also as the brake drum. Therefore, a number of parts of a drum brake can be reduced and a reduction in cost is achieved. Further, the brake shoe is contained at inside of the hub and accordingly, small size formation and light weight formation around the axle holder block are achieved and outlook performance thereof can be promoted.

Furthermore, the swing arm and the steering arm are offset to one side of a center of a vehicle body and the hub and the brake drum of the front wheel are offset to other side of the center of the vehicle body.

The swing arm as well as the steering arm and the hub of the front wheel as well as the brake drum are dividedly arranged in the motorcycle. Therefore, left and right weight balance of the motorcycle is improved and the maneuverability of the motorcycle can be promoted.

Preferably, in attaching the axle holder block via the king pin, a radial bearing capable of applying pre-load is attached to the axle holder block, the king pin is fitted to the radial bearing and a pre-load setting nut is screwed to the king pin to thereby cause the pre-load in the radial bearing.

When an amount of the pre-load is adjusted by the pre-load setting nut, an axial inner clearance of the radial bearing, that is, an amount of play in the axial direction is changed and accordingly, a degree of a stiffness of pivoting the axle holder block relative to the king pin is changed. In accordance with the pivoting stiffness degree, the steering torque characteristic by the steering arm is also changed. Therefore, by adjusting the pre-load amount, the steering torque characteristic can be adjusted.

Further, the play amount of the radial bearing in the axial direction can be reduced by adjusting the pre-load amount. When the play amount is small, influence of dimensional accuracy of the radial bearing on operation of a front suspension system or a steering system is extremely small. As a result, the steering characteristic by the steering arm (a characteristic of a steering an angle of a front wheel relative to a steering angle of a handle bar) is further stabilized.

### Effect of the Invention

The present invention achieves the following effects by the above-described constitution.

According to Claim 1, the brake shoes are attached to the axle holder block, the brake drum is integrally formed with the hub of the front wheel and the brake shoes are made to face at the inner peripheral face of the brake drum and accordingly, the axle holder block can serve also as the portion of attaching the brake shoes and the hub of the front wheel can serve also as the brake drum. Therefore, a number of parts of the drum brake can be reduced and a reduction in cost can be achieved. Further, the brake shoes are contained in the hub and accordingly, small size formation as well as light weight formation around the axle holder block are achieved and the outlook performance can be promoted.

Furthermore, the swing arm as well as the steering arm are offset to one side of the center of the vehicle body, the hub of the front wheel as well as the brake drum are offset to other side of the center of the vehicle body and therefore, the left and right weight balance of the motorcycle is improved and the maneuverability of the motorcycle can be promoted.

According to Claim 2, in attaching the axle holder block via the king pin, the radial bearing capable of applying pre-load is attached to the axle holder block, the king pin is fitted to the radial bearing and the pre-load setting nut is screwed to the king pin to thereby produce pre-load in the radial bearing and accordingly, by adjusting the pre-load amount by the pre-load setting nut, axial inner clearance of the radial bearing, that is, play amount in the axial direction is changed and the pivoting stiffness degree of the axle holder block relative to the king pin can be changed. When the pivoting stiffness degree is changed, the steering torque characteristic by the steering arm can also be changed. Therefore, by adjusting the pre-load amount, a predetermined steering torque characteristic can easily be adjusted.

Further, by adjusting the pre-load amount by the pre-load setting nut, the play amount of the axial direction of the radial bearing can be reduced. When the play amount is small, influence of the dimensional accuracy of the radial bearing on the operation of the front suspension system and the steering system is extremely small. Therefore, by adjusting the pre-load amount, without being influenced by the dimensional accuracy of the bearing, further stabilized steering characteristic can easily be obtained.

### Mode for Carrying Out the Invention

An explanation will be given of embodiments according to the present invention in reference to the attached drawings as follows.

### Brief Description of the Drawings

Fig. 1 is a left side view of a scooter-type motorcycle according to the present invention.
Fig. 2 is a right side view of the scooter-type motorcycle according to the present invention.
Fig. 3 is a front view of the scooter-type motorcycle according to the present invention.
Fig. 4 is a left side view around a main frame according to the present invention.
Fig. 5 is a right side view of a front portion of the scooter-type motorcycle according to the present invention.
Fig. 6 is a front sectional view of a front suspension system and a steering system according to the present invention.
Fig. 7 is a right side view around an axle holder block according to the present invention.
Fig. 8 is a sectional view taken along a line 8-8 of Fig. 7.
Fig. 9 is a sectional view taken along a line 9-9 of Fig. 7.
Fig. 10 is a schematic view of a drum brake according to the present invention.
Fig. 11 is a sectional view taken along a line 11-11 of Fig. 5.
Fig. 12 is an explanatory view of setting pre-load of a first and a second bearing according to the present invention.

Further, "front", "rear", "left", "right", "upper" and "lower" follow directions viewed by a driver and Fr designates a front side, Rr designates a rear side, L designates a left side and R designates a right side. Further, the drawings are viewed in directions of notations.

Fig. 1 is a left side view of a scooter type motorcycle according to the present invention.

A scooter type motorcycle 1 is arranged with a main frame 2 comprising a frame member which also serves as a battery containing box at a lower central portion, a front portion of the main frame 2 is attached with a front suspension system 4 of a swing arm style for suspending a front wheel 3 and a steering system 5 separately from the front suspension system 4, a rear portion of the main frame 2 is attached with a rear suspension system 8 for suspending a power unit 6 and a rear wheel 7 and a rear upper portion of the main frame 2 is attached with a seat 9.

The power unit 6 is provided with an engine 6a and a motor 6b as a drive source. The front wheel 3 and the rear wheel 7 of the present invention adopt wheels having a particularly large diameter (14 through 20 inches).

According to the scooter type motorcycle 1 (hereinafter, simply referred to as "motorcycle 1"), the vehicle body is surrounded in a front and rear direction, a front fender 11, a front cover 12, a handle cover 13, a leg shield 14 for covering the leg portion of the driver, a step floor 15 on which feet of the driver are mounted and two front and rear fenders 16F and 16R.

In the drawing, numeral 17 designates a mirror, numeral 18 designates a handle bar, numeral 19 designates a head lamp, numeral 21 designates a turn signal lamp, numeral 22 designates a radiator, numeral 23 designates a main stand, numeral 24 designates a side stand, numeral 25 designates a carrier, numeral 26 designates a tail lamp, numeral 38 designates a side cover serving also as a containing box and numeral 39 designates a horn.

Fig. 2 is a right side view of the scooter type motorcycle according to the present invention and in the drawing, an air cleaner 27, a carburetor 28, an exhaust pipe 29 and a muffler 31 are arranged in front of the rear wheel 7. Notation 31a designates an exhaust port.

Fig. 3 is a front view of the scooter type motorcycle according to the present invention, showing that an outer side face of a front swing arm (swing arm) 42 is disposed on a side of the center of the vehicle of an outer end of the leg shield 14 by a dimension S. The handle bar 18 is formed integrally also with an outlook cover by recycled resin. The head lamp 19 and the turn signal lamps 21 are provided at the front cover 12 and accordingly, there is no need of installing openings at the handle cover 13 (refer to Fig. 1), the cover can be formed by recycled resin and is constituted integrally with the handle bar 18 and accordingly, there is achieved an effect of reducing a number of parts. Notation 18a designates grips and numeral 78 designates a brake operating lever.

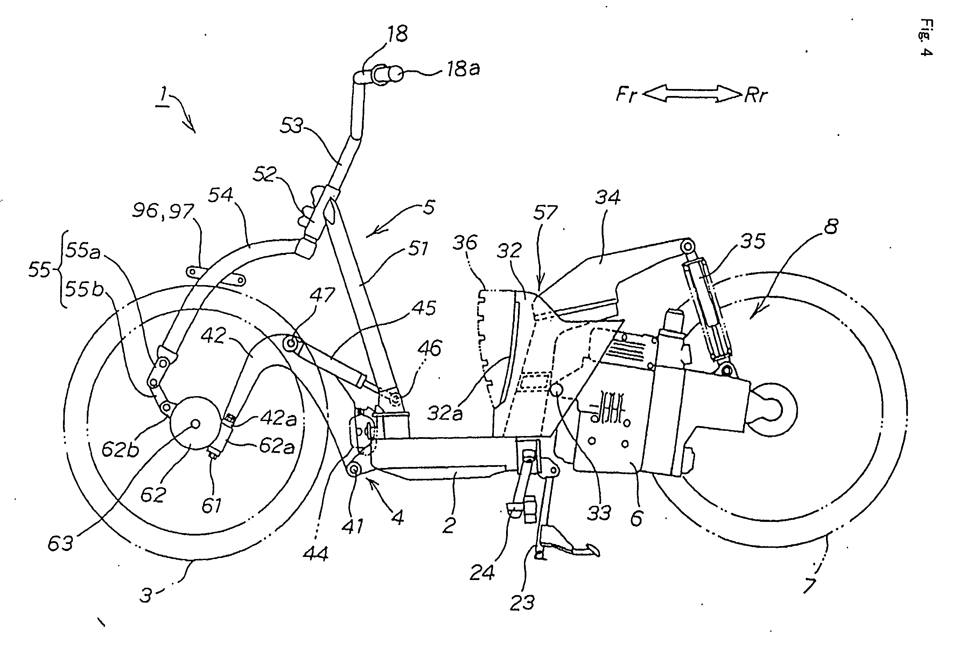

Fig. 4 is a left side view around the main frame according to the present invention.

Explaining the power unit 6 and the rear suspension system 8, a frame pivot 32 is installed at a rear upper portion of the main frame 2, the frame pivot 32 is attached with the power unit 6 via a rear pivot shaft 33 swingably in the up and down direction, the rear wheel 7 is attached to the power unit 6, further, a seat rail 34 is attached to the rear upper portion of the main frame 2 and a rear cushion 35 is attached to the seat rail 34 in front of the rear wheel 7 in the drawing. The seat rail 34 is further attached with the seat 9, the rear fender 16F and the containing box 38 shown by Fig. 1.

The frame pivot 32 also serves as a cover for covering a rear portion of the main frame 2, perforated with a cover attaching hole 32a at its front portion and the cover attaching hole 32a is attached with a radiator cover 36. The radiator cover 36 is extended in a downward direction along a line of a front face of the seat 9 (refer to Fig. 1) and therefore, the outlook performance is extremely improved and does not interfere with the legs of the driver stretched to the step floor 15 on the front side (refer to Fig. 1).

A vehicle body frame 57 is constituted of a combination structure of the main frame 2 arranged at the central lower portion of the motorcycle 1, the seat rail 34 at the rear upper portion of the main frame 2 and a head pipe post 51 at the front upper portion of the main frame 2.

According to the front suspension system 4, a base end of a front swing arm 42 substantially in an inverse U-like shape in side view is attached to the front lower portion of the main frame 2 via a front pivot shaft 41 swingably in the up and down direction, an axle holder block 62 is attached to a front end of the swing arm 42 via a king pin 61 pivotably in the left and right direction, an axle shaft 63 is attached to the axle shaft holder block 62 and the front wheel 3 is rotatably attached to the axle shaft 63. That is, the front swing arm 42 is extended forwardly from the front portion of the main frame 2 and the front wheel 3 is supported by the swing arm in a cantilever style.

Further, according to the front suspension system 4, a damper member 44 for alleviating impact of the swing arm 42 in the swing direction (impact from road face), is separated from a front damper 45 for alleviating amplitude of vibration of the front swing arm 42 in the swing direction.

In details, the resin spring (damper member) 44 for alleviating impact of the front swing arm 42 in the swing direction, is interposed between the main frame 2 and the front swing arm 42 and the front damper 45 is attached between the main frame 2 and the front swing arm 42. The resin spring 44 is a block made of a resin having an elasticity to constitute a spring action.

Specifically, according to a structure of attaching the front damper 45, one end portion of the front damper 45 is supported by a pivot shaft 46 at the right side portion (rear side of the drawing) of a base portion of the head pipe post 51, mentioned later, and other end portion of the front damper 45 is supported by a pivot shaft 47 on the left side portion of a top portion of the swing arm 42. Further, one end portion of the front damper 45 may directly be attached to the main frame 2.

According to the steering system 5, the head pipe post 5 is extended from a front upper portion of the main frame 2 in an oblique upper direction, a head pipe 52 is fixed to a front end of the head pipe post 51, a handle post 53 is rotatably attached to the head pipe 52, a steering arm 54 is attached to a lower end of the handle post 53 and a front end (lower end) of the steering arm 54 is connected to a knuckle 62b via a link mechanism 55.

That is, the knuckle 62b is integrally extended from the axle holder block 62 and the knuckle 62b is connected with the steering arm 54 to thereby carry out steering of the front wheel 3.

The link mechanism 55 comprises a combination of a first link 55a connected to a front end of the steering arm 54 and a second link 55b connected to the knuckle 62b and is arranged within the wheel of the front wheel 3 having a comparatively large diameter.

The link mechanism 55 is arranged within the wheel of the front wheel 3 and accordingly, effective utilization of space can be achieved. Further, the space on the lower side and the rear side of the head pipe 52 can sufficiently be provided and accordingly, the degree of freedom of design of the motorcycle 1 is promoted. Further, space of the step floor 15 (refer to Fig. 1) can sufficiently be provided.

As described above, the front suspension system 4 of the swing arm style is adopted and large load from the front wheel 3 is received by the main frame 2 having high rigidity via the front swing arm 42 and the front pivot shaft 41 and accordingly, the large load can be received by the main frame 2 firmly and effectively. Therefore, large load is not operated to the head pipe post 51.

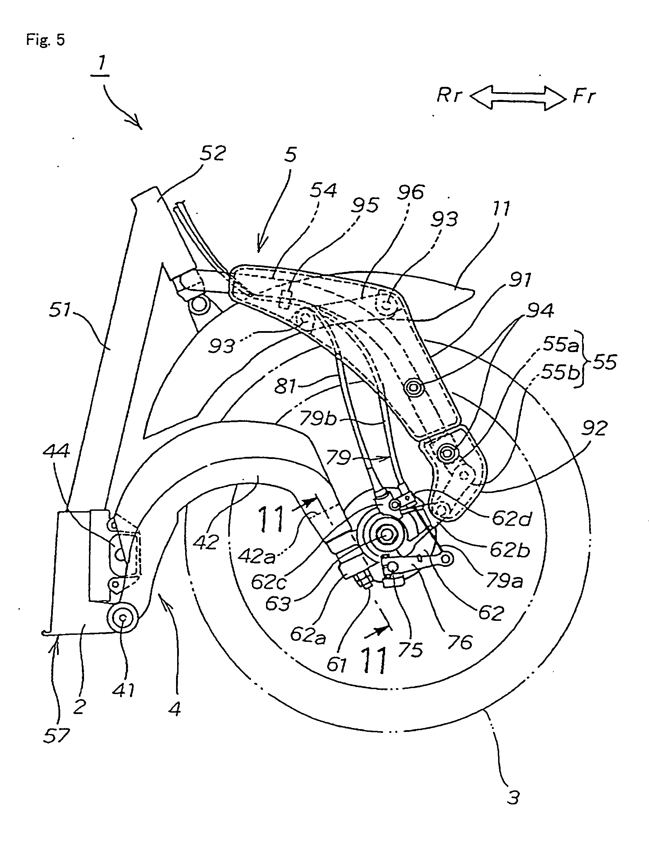

Fig. 5 is a right side view of a front portion of the scooter type motorcycle according to the present invention, showing that a right side portion of the steering arm 54 is covered by a first cover (steering arm cover) 91 and a right side portion of the link mechanism 55 is covered by a second cover (link cover) 92. In this way, the steering arm 54 and the link mechanism 55 are covered by the first and the second covers 91 and 92 and accordingly, outlook performance of the motorcycle 1 can be promoted.

Further, it is arbitrary to cover a total surrounding of the steering arm 54 and a total surrounding of the link mechanism 55 by the first and the second covers 91 and 92.

Further, the drawing shows that a brake cable 79 connecting a brake operating arm 76 and the brake operating lever 78 (refer to Fig. 3) and a speedometer cable 81 connecting a gear box 62c and a speedometer, not illustrated, are disposed along the steering arm 54 and passed through inside of the first cover 91.

In this way, various kinds of flexible linear members (cables, harnesses, hoses) passing between the side of the vehicle body frame 57 and the side of the front wheel 3, are disposed along the steering arm 54 and therefore, the flexible linear members can reasonably be extended around easily, the outlook performance can be promoted, further, friction (frictional resistance) in bending the flexible linear members can be reduced.

Further, the various kinds of flexible linear members are passed at inside of the first cover 91 and portions thereof exposed to outside are reduced and therefore, the outlook performance of the motorcycle can be promoted.

Further, when the speedometer is constituted of an electric type meter, a harness may be used in place of the speedometer cable 81.

Fig. 6 is a front sectional view of the front suspension system and the steering system according to the present invention, showing the link mechanism 55 to develop for convenience of explanation.

According to the drawing, the front swing arm 42 is extended from the front portion of the main frame 2 (refer to Fig. 1) while being bent in the right direction to detour the front wheel 3 and in the meantime, the steering arm 54 is extended forwardly from the head pipe 52 disposed at the center C of the vehicle body while being bent to the right to detour the front wheel 3.

Further, the drawing shows that the front fender 11 and the first and the second covers 91 and 92 are attached to the steering arm 54 and the axle holder block 62. Specifically, the front fender 11 is a movable fender attached to the steering arm 54 attachably and detachably by bolts 93. The first and the second covers 91 and 92 are attached to the steering arm 54 also attachably and detachably by bolts 94. The second cover 92 can also be attached to the axle holder block 62 attachably and detachably by bolts, not illustrated. In this way, the front fender 11 and the first and the second covers 91 and 92 are attached to the steering arm 54 and therefore, there is no need of attaching members such as stays or the like comprising separate members for attaching to the vehicle frame 57, the attaching structure is simplified and attaching performance is promoted. Numerals 96 and 97 designate stays.

Further, the drawing shows that a middle portion of the brake cable 79 and a middle portion of the speedometer cable 81 are attached to the steering arm 54 via a clamp 95. In this way, middle portions of various kinds of flexible linear members (cables, harnesses, hoses) extended along the steering arm 54 are attached to the steering arm 54 by an attaching member of the clamp 95 or the like and accordingly, the flexible linear members can be extended around firmly and simply and with excellent outlook performance. Further, friction (frictional resistance) in bending the flexible linear members can further be reduced.

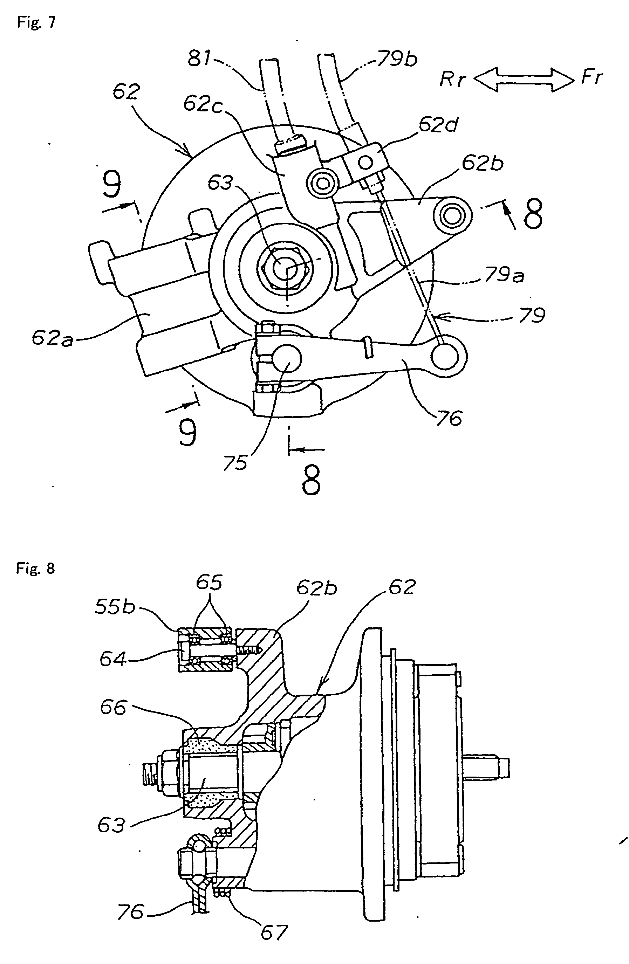

The present invention is featured in integrating a drum brake 70 between the axle holder block 62 and a hub 3a of the front wheel 3. An explanation will be given of structure of the axle holder block 62 and the drum brake 70 in reference to Fig. 7 through Fig. 10.

Fig. 7 is a right side view around the axle holder block according to the present invention.

The axle holder block 62 is a cast article of an aluminum alloy attached with the axle 63 at the center, formed with a supported portion (king pin attaching portion) 62a at the rear lower portion, formed with a knuckle 62b at the front upper portion, attached with a brake operating shaft 75 at the lower portion and formed with the gear box 62c at the upper portion.

The brake operating shaft 75 is rotatably attached to the axle holder block 62 and is attached with a brake operating arm 76 at an outer end portion thereof. The brake operating arm 76 is connected with an inner wire 79a of the brake cable 79 at a front end portion thereof. The gear box 62c is of a well-known mechanism in which gears, not illustrated, are contained and rotation of the axle 63 is transmitted to the speedometer cable 81 via the gears.

Further, the axle holder block 62 is integrally formed with an outer attaching portion 62d for attaching an outer 79b of the brake cable 79.

Fig. 8 is a sectional view taken along a line 8-8 of Fig. 7 in which only sections of essential portions are shown.

The drawing shows that the knuckle 62b is formed integrally with the axle holder block 62 and the knuckle 62b is attached with the second link 55b via a support bolt 64 and bearings 65. Further, the drawing shows that a boss portion 66 is cast and fixed in the axle holder block 62 and the axle 63 is attached to the axle holder block 62 by coupling the axle 63 to the boss portion 66 by a serration coupling. Numeral 67 designates a return spring.

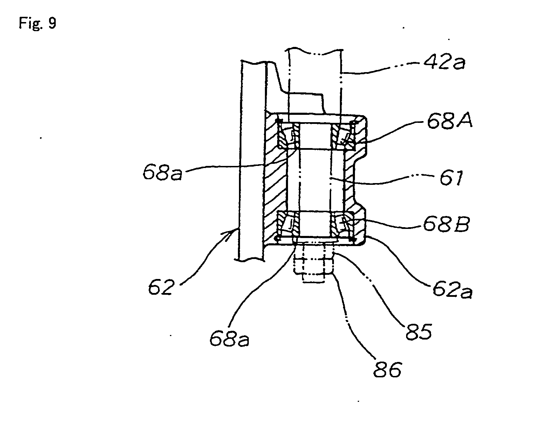

Fig. 9 is a sectional view taken along a line 9-9 of Fig. 7, showing that the supported portion 62a is integrally formed with the axle holder block 62. Notations 68A and 68B designate radial bearings. Further, the drawing is expressed by omitting portions.

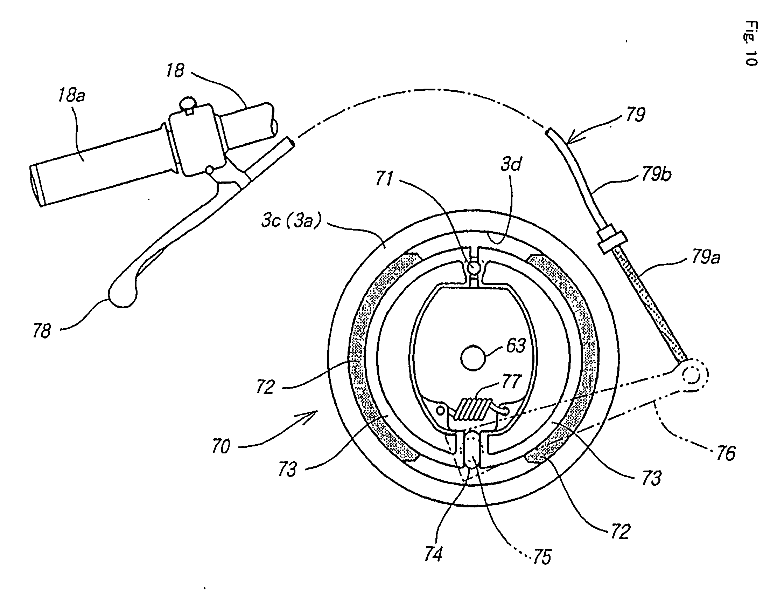

Fig. 10 is a schematic view of the drum brake according to the present invention.

The drum brake 70 is a diameter expanding type drum brake and is constituted of brake pads (linings) 72 attached to the axle holder block 62 (refer to Fig. 6) by an anchor pin 71, brake shoes 73 attached with the brake pads 72, a cam 74 for expanding the diameter of the brake shoes 73, the brake operating shaft 75 integral with the cam 74, the brake operating arm 76 for rotating the brake operating shaft 75, a brake drum 3c surrounding the brake shoes 73 and a return spring 77 for contracting the diameter of the brake shoes 73.

When the brake operating shaft 75 is pivoted by operating the brake operating lever 78 via the brake cable 79 and the brake operating arm 76, the cam 74 expands the diameter of the brake shoes 73 and accordingly, the brake is operated by frictional force between the brake pads 72 and an inner peripheral face 3d of the brake drum 3c.

Here, referring back to Fig. 6, an explanation will be given of structures of attaching the front wheel 3 and the drum brake 70.

The axle holder block 62 is extended on both sides of the center C of the vehicle body. According to the structure of attaching the front wheel 3, one end portion of the axle 63 is attached to the axle holder block 62 and other end portion of the axle 63 is rotatably attached with the hub 3a of the front wheel 3 via bearings 69 at inside of the axle holder block 62. The hub 3a is offset to the left side of the center C of the vehicle body and accordingly, the wheel 3b of the front wheel 3 is formed in a shape considerably bent to the left side.

According to the structure of attaching the drum brake 70, the brake shoes 73 are attached to the left end side of the axle holder block 62 via the anchor pin 71, the hub 3a is integrally formed with the brake drum 3c substantially in a shape of cup and the brake shoes 73 are surrounded by the brake drum 3c. Therefore, the brake shoes 73 face the inner peripheral face 3d of the brake drum 3c.

In this way, the axle holder block 62 serves also as a portion of attaching the brake shoes 73 and the hub 3a of the front wheel 3 serves also as the brake drum 3c. Therefore, a number of parts of the drum brake 70 can be reduced and the cost is reduced. Further, the brake shoes 73 are contained in the hub 3a and accordingly, the surrounding of the axle holder block 62 becomes small-sized and light-weighed, small size formation and light weight formation around the axle holder block 62 are achieved and the outlook performance can be promoted. Numeral 82 designates a needle bearing.

The present invention is featured in that the front swing arm 42 as well as the steering arm 54 are offset to one side (right side) of the center C of the vehicle body and the hub 3a of the front wheel 3 and the brake drum 3c are offset to other side (left side) of the center C of the vehicle body. In this way, the front swing arm 42 as well as the steering arm 54 and the hub 3a of the front wheel 3 as well as the brake drum 3c are dividedly arranged in the motorcycle 1 and accordingly, left and right weight balance of the motorcycle 1 is improved and the maneuverability of the motorcycle 1 can be promoted.

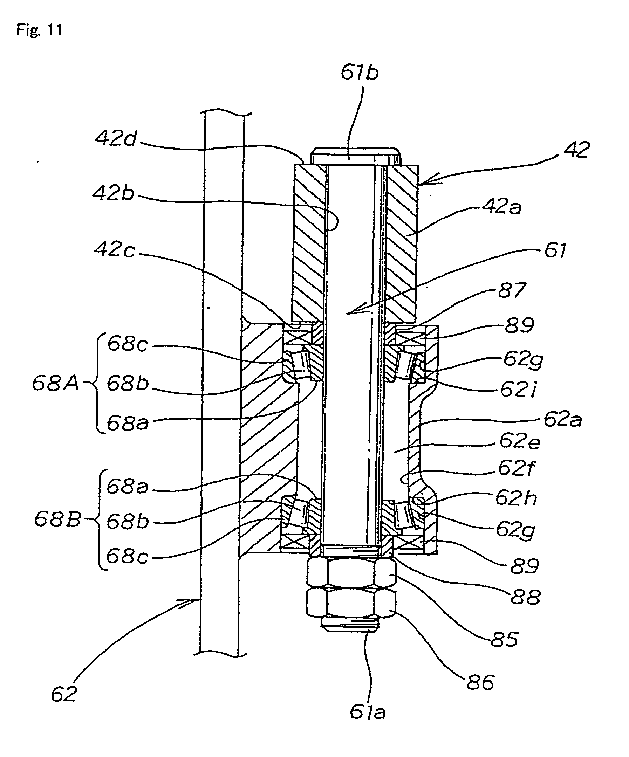

Fig. 11 is a sectional view taken along a line 11-11 of Fig. 5, showing that the axle holder block 62 is attached to the front end of the front swing arm 42 via the king pin 61 pivotably in the left and right direction.

The swing arm 42 is formed with a supporting portion 42a at a front end thereof and the supporting portion 42a is perforated with a pin hole 42b penetrating in the up and down direction.

The king pin 61 is a long pin which is attached to the supporting portion 42a of the swing arm 42 by being fitted to the pin hole 42b by press-fitting and one end of which is projected from one end face 42c of the supporting portion 42a. Further, the king pin 61 is formed with a male screw 61a at a projected one end, formed with a flange portion 61b at other end thereof and is made to be unable to move to the side of the male screw 61a by bringing the flange portion 61b in contact with other end face 42d of the supporting portion 42a. The male screw 61a is screwed with the pre-load setting nut 85 and a lock nut 86.

The supported portion 62a of the axle holder block 62 is formed with a through hole 62e penetrating in the up and down direction and a stepped difference portion 62f having a smaller diameter at the center of the through hole 62e in the longitudinal direction by which bearing fitting portions 62g are formed on both sides of the through hole 62e and outer rings 68c of two pieces of the radial bearings (the first radial bearing 68A on the upper side and the second radial bearing 68B on the lower side) are fitted to the bearing fitting portions 62g. An interval between the first and the second radial bearings 68A and 68B is determined by a length of the stepped difference portion 62f.

The supported portion 62a can be attached to the supporting portion 42a pivotably in the left and right direction via the king pin 61 as well as the first and the second radial bearings 68A and 68B by fitting the king pin 61 to inner rings 68a of the first and the second radial bearings 68A and 68B. That is, the axle holder block 62 is attached to the front swing arm 42 via the king pin 61 pivotably in the left and right direction.

The first and the second radial bearings 68A and 68B are radial bearings capable of applying pre-load, that is, bearings of a style capable of bearing an axial load, for example, are conical roller bearings or angular ball bearings.

A first distance collar 87 is interposed between the one end face 42c of the supporting portion 42a and the inner ring 68a of the first radial bearing 68A, further, a second distance collar 88 is interposed between the inner ring 68a of the second radial bearing 68B and the pre-load setting nut 85. The first and the second distance collars 87 and 88 are ring-like members penetrated with the king pin 61.

In the drawing, numeral 89 designates an oil seal.

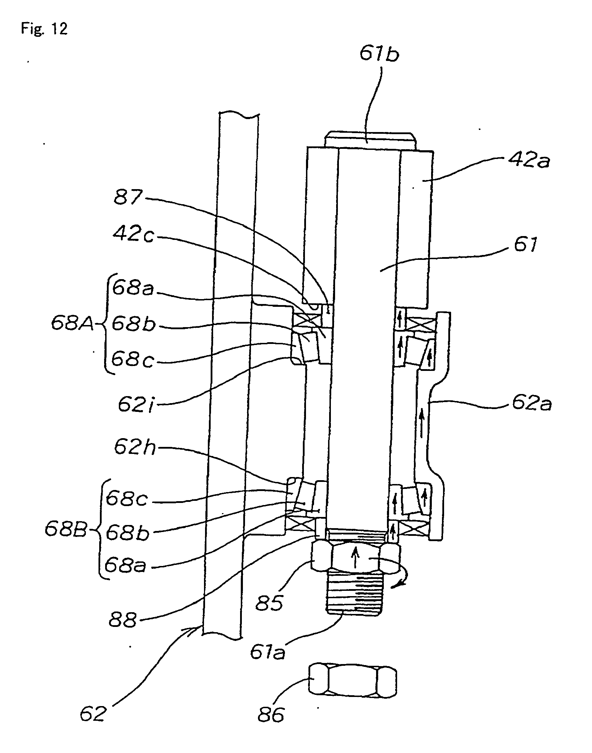

Fig. 12 is an explanatory view of setting pre-load of the first and the second bearings according to the present invention.

When the pre-load setting nut 85 is screwed to the male screw 61a in a state of removing or loosening the lock nut 86, a force (pre-load) in the axial direction of the pre-load setting nut 85 is transmitted in a route of the second distance collar 88 → the inner ring 68a of the second radial bearing 68B → a rolling member 68b → the outer ring 68c → a stepped difference face 62h → the supported portion 62a → a stepped difference face 62i → the outer ring 68c of the first radial bearing 68A → a rolling member 68b → the inner ring 68a → the first distance collar 87 → the one end face 42c of the supporting portion 42a.

Therefore, "axial inner clearances" of the first and the second radial bearings 68A and 68B can be adjusted by adjusting an amount of screwing the pre-load setting nut 85 to thereby apply predetermined pre-load.

The "axial inner clearance" designates an amount of displacement when either one of track rings (inner ring and outer ring) of a bearing is fixed and other of the track rings which is not fixed and can freely be moved is moved in the axial direction in a state of no load exerted with no external force and is moved from one extreme position where a rolling member is brought into contact with the both track rings to an extreme position on the opposed side in the axial direction, or so-to-speak an amount of play in the axial direction.

By adjusting an amount of pre-load (magnitude of pre-load), the axial inner clearances of the first and the second bearings 68A and 68B, that is, the play amount in the axial direction is changed. As a result, a pivoting stiffness degree (a degree of a stiffness in pivoting) in the case of pivoting the supported portion 62a of the axle holder block 62 in the left and right direction relative to the king pin 61, is changed. When the pivoting stiffness degree is changed, the steering torque characteristic by the steering arm 54 (refer to Fig. 4) is also changed. Therefore, by adjusting the pre-load amount, a predetermined steering torque characteristic can easily be adjusted.

Further, by adjusting the pre-load amount, the play amount in the axial direction of the first and the second radial bearings 68A and 68B can be reduced. When the play amount is small, influence of the dimensional accuracy of the first and the second radial bearings 68A and 68B on the operation of the front suspension system or the steering system is extremely small. For example, in respect of a timing of steering the steering arm 54, a response timing of the axle holder block 62 is further accelerated, as a result, steer following performance of the axle holder block 62 is promoted. In this way, by adjusting the pre-load amount, without being influenced by the dimensional accuracy of the first and the second radial bearings 68A and 68B, further stabilized steering characteristic (a characteristic of a steering angle of a front wheel relative to a steering angle of a handle bar) can easily be obtained.

When the pre-load setting operation is finished, the lock nut 86 is screwed and loosening of the pre-load setting nut 85 is prevented.

Further, according to the above-described embodiments of the present invention, the motorcycle 1 is not limited to the scooter-type motorcycle.

The first and the second radial bearings 68A and 68B may be bearings capable of applying pre-load and other than cone roller bearings or angular roller bearings, they may be, for example, deep groove ball bearings. Further, the radial bearings 68A and 68B are not limited to the two upper and lower pieces but, for example, a single one of them may be used.

The lock nut 86 is not an indispensable constituent element but may be constituted to be able to prevent loosening of the pre-load setting nut 85 after finishing pre-load setting. For example, a washer with tongue may be provided in place of the lock nut 86.

Presence or absence of the first and the second distance collars 87 and 88 as well as the oil seals 89 is arbitrary and when these members are removed, the inner rings 60a of the first and the second radial bearings 68A and 68B may directly be brought into contact with the supporting portion 42a and the pre-load setting nut 85 as shown by Fig. 9.

### Problem:

To achieve small size formation as well as light weight formation around an axle holder block and promote outlook performance thereof.

### Solving Means:

There is provided a motorcycle in which a swing arm 42 is attached to a main frame swingably in up and down direction, an axle holder block 62 is attached to the swing arm via a king pin pivotably in left and right direction, a front wheel 3 is rotatably attached to an axle 63 of the axle holder block, a knuckle is integrally extended from the axle holder block and a steering arm is connected to the knuckle to thereby steer the front wheel. Brake shoes 73 are attached to the axle holder block, the brake drum 3c is integrally formed with a hub 3a of the front wheel and the brake shoes are made to face at an inner peripheral face of the brake drum.

## Claims

1. A motorcycle (1) comprising:
a vehicle body having a main frame (2);
an arm (42), attached to the main frame (2), said arm (42) being formed at a front end thereof with a supporting portion (42a) for supporting an axle holder block (62) via a king pin (61) pivotably in a left and right direction;
a front wheel (3), rotatably attached to an axle (63) of the axle holder block (62);
a knuckle (62b), integrally extended from the axle holder block (62); and a steering arm (54), connected to the knuckle (62b) to thereby carry out steering of the front wheel (3);
wherein brake shoes (73) are attached to the axle holder block (62), a brake drum (70) is integrally formed with a hub (3a) of the front wheel (3) and the brake shoes (73) are made to face an inner peripheral face of the brake drum (70); and
wherein the swing arm (42) and the steering arm (54) are offset to one side of a center (C) of the vehicle body and the hub (3a) and the brake drum (70) of the front wheel (3) are offset to the other side of the center (C) of the vehicle body,
said motorcycle (1) being **characterized in that**
said arm (42) attached to the main frame (2) is a swing arm (42) swingably in an up and down direction;
said supporting portion (42a) being arranged on one side of said axle holder block (62);
one end of said king pin (61) being fixed to the supporting portion (42a), the other end thereof penetrating said axle holder block (62) in the up and down direction; and
said axle holder block (62) is attached to the king pin (61) via a radial bearing (68A, 68B) capable of applying pre-load.

2. The motorcycle (1) according to claim 1, wherein in attaching the axle holder block (62) via the king pin (61), the radial bearing (68A, 68B) capable of applying pre-load is attached to the axle holder block (62), the king pin (61) is fitted to the radial bearing (68A, 68B) and a pre-load setting nut (85) is screwed to the king pin (61) to thereby cause the pre-load in the radial bearing (68A, 68B).

## Patentansprüche

1. Kraftrad (1), umfassend:
einen Fahrzeugkörper mit einem Hauptrahmen (2);
einen Arm (42), welcher an dem Hauptrahmen (2) angebracht ist, wobei der Arm (42) an einem vorderen Ende davon mit einem Tragabschnitt (42a) ausgebildet ist, um einen Achshalterblock (62) über einen Drehzapfen (61) zu lagern, welcher in einer linken und rechten Richtung schwenkbar ist;
ein Vorderrad (3), welches drehbar an einer Achse (63) von dem Achshalterblock (62) angebracht ist;
einen Achsschenkel (62b), welcher sich integral von dem Achshalterblock (62) aus erstreckt; und
einen Lenkarm (54), welcher mit dem Achsschenkel (62b) verbunden ist, um auf diese Weise ein Lenken des Vorderrads (3) durchzuführen;
wobei Bremsschuhe (73) an dem Achshalterblock (62) angebracht sind, eine Bremstrommel (70) integral mit einer Nabe (3a) von dem Vorderrad (3) ausgebildet ist, und die Bremsschuhe (73) dazu ausgebildet sind, zu einer Innenumfangsfläche von der Bremstrommel (70) zu weisen; und
wobei der Schwingenarm (42) und der Lenkarm (54) zu einer Seite von einer Mitte (C) von dem Fahrzeugkörper versetzt sind und die Nabe (3a) und die Bremstrommel (70) von dem Vorderrad (3) zu der anderen Seite von der Mitte (C) von dem Fahrzeugkörper versetzt sind,
wobei das Kraftrad (1) **dadurch gekennzeichnet ist, dass** der Arm (42), welcher an dem Hauptrahmen (2) angebracht ist, ein Schwingenarm (42) ist, welcher in einer Auf- und Ab-Richtung schwenkbar ist;
der Tragabschnitt (42a) auf einer Seite von dem Achsshalterblock (62) angeordnet ist;
ein Ende von dem Drehzapfen (61) an dem Tragabschnitt (42a) festgelegt ist, das andere Ende davon den Achshalterblock (62) in einer Auf- und Abrichtung durchdringt; und
der Achshalterblock (62) an dem Drehzapfen (61) über ein Radiallager (68A, 68B) angebracht ist, welches eine Vorspannung ausüben kann.

2. Kraftrad (1) nach Anspruch 1, wobei beim Anbringen des Achshalterblocks (62) über den Drehzapfen (61) das Radiallager (68A, 68B), welches eine Vorspannung ausüben kann, an dem Achshalterblock (62) angebracht wird, der Drehzapfen (61) an dem Radiallager (68A, 68B) angebracht wird und eine Vorspannung-Einstellmutter (85) auf den Drehzapfen (61) geschraubt wird, um auf diese Weise die Vorspannung in dem Radiallager (68A, 68B) zu bewirken.

## Revendications

1. Motocyclette (1) comprenant :
un corps de véhicule ayant un châssis principal (2) ;
un bras (42) fixé au châssis principal (2), ledit bras (42) étant formé au niveau de son extrémité avant avec une partie de support (42a) pour supporter un bloc de support d'essieu (62) via une cheville (61) pouvant pivoter à gauche et à droite ;
une roue avant (3) fixée de manière rotative sur un essieu (63) du bloc de support d'essieu (62) ;
un joint articulé (62b) étendu de manière solidaire à partir du bloc de support d'essieu (62) ; et un bras de direction (54) raccordé au joint articulé (62b) pour réaliser ainsi la direction de la roue avant (3) ;
dans laquelle des patins de frein (73) sont fixés au bloc de support d'essieu (62), un tambour de frein (70) est formé de manière solidaire avec un moyeu (3a) de la roue avant (3) et les patins de frein (73) sont faits pour faire face à une face périphérique intérieure du tambour de frein (70) ; et
dans laquelle le bras oscillant (42) et le bras de direction (54) sont décalés d'un côté d'un centre (C) du corps de véhicule et le moyeu (3a) et le tambour de frein (70) de la roue avant (3) sont décalés de l'autre côté du centre (C) du corps de véhicule,
ladite motocyclette (1) étant **caractérisée en ce que** :
ledit bras (42) fixé au châssis principal (2) est un bras oscillant (42) oscillant vers le haut et vers le bas ;
ladite partie de support (42a) étant agencée d'un côté dudit bloc de support d'essieu (62) ;
une extrémité de ladite cheville (61) étant fixée à la partie de support (42a), son autre extrémité pénétrant dans ledit bloc de support d'essieu (62) vers le haut et vers le bas ;
ledit bloc de support d'essieu (62) est fixé à la cheville (61) via un palier radial (68A, 68B) capable d'appliquer une précharge.

2. Motocyclette (1) selon la revendication 1, dans laquelle lorsque l'on fixe le bloc de support d'essieu (62) via la cheville (61), le palier radial (68A, 68B) capable d'appliquer la précharge est fixé sur le bloc de support d'essieu (62), la cheville (61) est montée dans le palier radial (68A, 68B) et un écrou de réglage de précharge (85) est vissé sur la cheville (61) pour provoquer ainsi la précharge dans le palier radial (68A, 68B).
